# EUROPEAN PATENT APPLICATION

(11) **EP 2 315 106 A2**
(43) Date of publication of application: **27.04.2011**
(21) Application number: 10187568.0
(22) Date of filing: 14.10.2010
(51) Int. Cl.: G06F 3/041, G06F 3/044, G06F 3/042

(54) **Method and system for detecting control commands**

(30) Priority: 20.10.2009 DK 200901137
(71) Applicant: BANG & OLUFSEN A/S, 7600 Struer (DK)
(72) Inventor: Ejlersen, Finn, 7500, Holstebro (DK); Gadeberg, Jesper, 7600, Struer (DK)
(74) Representative: Hussey, Paul Anthony

(57) **Abstract**

The invention is a method and a system for detecting commands issued by a user of a given apparatus. Detection is performed in a 3-dimensional space around the apparatus and by touching directly on the apparatus. A sensor arrangement for detecting changes in electric fields generated by capacitive means enables detection of objects, e.g. a finger, in one or more proximity fields surrounding the apparatus, and by directly touching the apparatus. Detecting objects in a remote field of the apparatus is enabled by infrared means.

Typical applications are support of operation of multimedia apparatuses, AV systems, media players, and similar equipment. The invention has properties malting it suitable for mounting on printed circuit boards and improving the quality of the detection system such that user-supplied commands may be certainly and unambiguously detected, interpreted and executed as related functions in a given apparatus.

## Description

### Technical Field

The invention is related to detecting commands issued by a user of a given apparatus. Detection is performed in a 3-dimensional space around the apparatus and by touching directly on the apparatus. Dedicated means are used for detecting position of objects located at a distance from the apparatus, close to the apparatus and in direct physical contact with the apparatus.

Typical applications are operation of multimedia apparatuses, AV systems, media players, and similar equipment.

The invention has properties making it suitable for mounting on printed circuit boards and improving the quality of the detection system such that user-supplied commands may certainly and unambiguously be detected, interpreted and executed as related functions in a given apparatus.

### Introduction

Control systems based on touch-sensitive surfaces is prior art, also called "sensi touch", and have been used for a number of years.

Recent applications include systems that may detect position of objects in proximity fields around an apparatus, also called "proximity sensing". A system is disclosed by Synaptics Inc., as published in US 2007/0262951.

For detecting objects at a greater distance from an apparatus, IR- or RF-based systems are known.

Examples of other known touch-based input devices can be found in US Patent Applications Pub. Nos. US 2008/0246723 A1, US 2009/0160809 A1, and US 2009/0224776 A1.

The present invention combines in one system a method for detecting user-supplied control commands, where the method is detecting and determining whether commands are issued remotely from the apparatus and/or issued in one or more individual electric fields in the proximity of the apparatus and/or whether the command is issued as a physical touch on the apparatus on one or more touch-sensitive fields, and where a related control command for execution in the apparatus is generated.

Accordingly, there is provided a method for detecting user-supplied input control commands for an apparatus, wherein the apparatus comprises an input device having a primary display face provided in an x,y plane, at least one analog signal emitter, at least one analog signal receiver, and a plurality of capacitive means operable to generate a plurality of electric fields, wherein at least two of said capacitive means are positioned on the x,y plane of said primary display face, and wherein at least one of said capacitive means is provided adjacent said primary display face on a plane orthogonal to the x,y plane of said primary display face, wherein the method comprises the steps of:
detecting a user input command in the form of a touch command or a non-touch command;
in the case of a touch command, determining whether said touch command comprises a physical touch on said x,y plane of said primary display face or a physical touch on said plane orthogonal to said x,y, plane of said primary display face;
in the case of a non-touch command, determining whether said non-touch command is issued remotely from said apparatus or issued in one or more individual electric fields provided in the proximity of the apparatus; and
generating a control command based on the user input command detected.

The use of touch commands and non-touch commands, as well as the different types of commands within these categories, allow for a wide variety of possible input command methods for the input device. As touch commands may be input on orthogonal planes, this may allow that different adjacent surfaces of a three-dimensional object may be used to input different commands, e.g. the surfaces of a cube having appropriate touch sensor technology. The use of the analog signal emitter and receiver, as well as the capacitive means, allow for the detection of user commands at a distance from the primary display face.

Preferably, at least one of said capacitive means is provided lying along a line in a plane which is different from, but parallel to the x,y plane of said primary display face, and wherein the method comprises the step of determining whether said touch command comprises a physical touch on said plane parallel to the x,y plane of said primary display face.

This allows for different input planes to be spaced along the z-axis of a device, e.g. an input device comprising a substantially planar glass panel may allow commands to be input on the front face of the panel and on the rear face of the panel.

Preferably, one or more of the capacitive means are divided into two or more segments which are individually receptive to user input commands, and wherein the method comprises the step of determining at which segment said user input command is detected.

As the capacitive means are segmented, this allows different commands to be selected based on the detected location of the touch (or non-touch) command (i.e. the segments where the touch command was detected).

Preferably, said input device comprises a substantially planar body standing proud of said apparatus, wherein said primary display face is provided on a major surface of said substantially planar body, and wherein at least one of said capacitive means is provided at a minor edge surface of said substantially planar body, and wherein the method comprises the step of determining whether said touch command comprises a physical touch on said primary display face or a physical touch on said minor edge surface.

As the touch commands may be input on different adjacent surfaces of a three-dimensional object, such a system allows for a greated combination or arrangement of acceptable input commands.

Preferably, one or more of the capacitive means are integrated in a touch-sensitive screen.

Preferably, said at least one analog signal emitter and said at least one analog signal receiver are operable to detect user-supplied control commands issued in a remote field at a distance from the apparatus which is greater than a defined proximity field distance.

Preferably, said at least one analog signal emitter and said at least one analog signal receiver are selected from one or more of the following: an infra-red (IR) device, a radio frequency (RF) device, an ultrasound RF device.

Preferably, at least one of said capacitive means is operable to generate electrical fields in the form of at least one proximity field located adjacent and substantially in front of said primary display face, wherein the method comprises the step of detecting that an object is moved into said at least one proximity field, moved out of said at least one proximity field or moved within said at least one proximity field, and wherein said step of generating a control command is based in part on said detection.

Preferably, at least one of said capacitive means is operable to generate electrical fields in the form of at least one remote field located distant from and substantially in front of said primary display face, wherein the method comprises the step of detecting that an object is moved into said at least one proximity field, moved out of said at least one proximity field or moved within said at least one remote field, and wherein said step of generating a control command is based in part on said detection.

It will be understood that the term "object" may refer to an object or token held by a user, or may also refer to at least a portion of the user's body detected by the system. As detection can be made based on the movement of an object relative to a proximity or remote field, this allows for commands to be entered by the user without touching the input device. In particular, different gestures may be interpretable as different user commands. Furthermore, different commands may be generated based on how close the user/object is to the input device, e.g. a display image may be adjusted based on the user's proximity to the display.

Preferably, the method comprises the step of detecting that an object touches a touch-sensitive field, and generating a related action.

There is also provided a touch-based input apparatus comprising:
a primary display face provided in an x,y plane;
at least one analog signal emitter;
at least one analog signal receiver;
a plurality of capacitive means operable to generate a plurality of electric fields; and
a control unit, wherein at least two of said capacitive means are positioned on the x,y plane of said primary display face, wherein at least one of said capacitive means is provided adjacent said primary display face on a plane orthogonal to the x,y plane of said primary display face, and wherein said control unit is operable to detect a user command in the form of a touch command or a non-touch command and to generate a control command based on the user command detected.

Preferably, said control unit is operable to:
detect a user command in the form of a touch command or a non-touch command;
determine whether said touch command comprises a physical touch on said x,y plane of said primary display face or a physical touch on said plane orthogonal to said x,y, plane of said primary display face; and
determine whether said non-touch command is issued remotely from said apparatus or issued in one or more individual electric fields provided in the proximity of the apparatus, and wherein said control unit is further operable to generate a control command based on the type of user command detected.

Preferably, at least one of said capacitive means is provided lying along a line in a plane which is different from, but parallel to the x,y plane of said primary display face, and wherein said control unit is further operable to determine whether said touch command comprises a physical touch on said plane parallel to the x,y plane of said primary display face.

Preferably, one or more of said capacitive means are divided into a plurality of segments individually receptive to user input commands, and wherein the said control unit is operable to determine at which segment said user input command is detected.

Preferably, the apparatus comprises an input device having a primary display face, said input device comprising a substantially planar body standing proud of said apparatus, wherein said primary display face is provided on a major surface of said substantially planar body, and wherein at least one of said capacitive means is provided at a minor edge surface of said substantially planar body, and wherein the method comprises the step of determining whether said touch command comprises a physical touch on said primary display face or a physical touch on said minor edge surface.

Preferably, said substantially planar body is selected from one of the following: a glass panel; a plastic panel.

Preferably, said control unit is operable to detect a touch command applied directly to the surface of said substantially planar body.

Alternatively, there is provided a method for detecting user-supplied control commands, wherein the method comprises detecting and determining whether commands are issued remotely from the apparatus and/or issued in one or more individual electric fields in the proximity of the apparatus and/or whether the command is issued as a physical touch on the apparatus on one or more touch-sensitive fields, and wherein the method is characterised by
a. one or more analog signal emitters and signal receivers;
b. two or more electric fields produced by capacitive means;
c. two or more of the capacitive means positioned in the same x,y plane, each disposed along a line and mutually in parallel along the x-axis or along the y-axis;
d. at least one of the capacitive means lying along a line in a plane which is different from, but parallel to said x,y plane indicated above.

Preferably, at least one of the capacitive means is provided along a line in a plane orthogonal to said x,y plane.

Preferably, one or more of the capacitive means are divided into two or more segments which are individually receptive to active input signals.

Preferably, one or more of the capacitive means are integrated in a touch-sensitive screen.

Preferably, the analog signal means are based on IR, where IR is emitting and reception means are detecting user-supplied control commands issued in a remote field at a distance from the apparatus which is greater than the defined proximity field distance.

Preferably, the analog signal means are based on RF, where RF is emitting and reception means are detecting user-supplied control commands issued in a remote field at a distance from the apparatus which is greater than the defined proximity field distance.

Preferably, it is detected that an object approaches or an object is moving away from one or more proximity fields, and a related action is generated.

Preferably, it is detected that an object is moved in a proximity field, and a related action is generated.

Preferably, it is detected that an object approaches or an object is moving away from one or more remote fields, and a related action is generated.

Preferably, it is detected that an object is moved in a remote field, and a related action is generated.

Preferably, it is detected that an object touches a touch-sensitive field, and a related action is generated.

There is also provided a system containing a display screen and means for detecting user-supplied control commands as physical touch on an apparatus and/or object movements in remote fields and/or object movements in proximity fields, where detection of user-supplied control commands and related actions are according to the above method.

It will be understood that the invention may comprise use of any suitable capacitive sensor technology, e.g. surface capacitance, projected capacitive touch, etc.

The invention operates with a number of functional properties:
- May detect a direct physical touch on the apparatus, e.g. by a user touching the apparatus with a finger; this is termed a touch field.
- May detect a physical touch on the surface of the apparatus, and touch on the edge of the surface of the apparatus. The edge is typical a surface perpendicular to the surface.
- May discern between "close to" and "directly touching" the surface, where "close to" is e.g. 5 cm from the surface; this is to be regarded as a proximity field.
- May discern between "close to" and "in the vicinity of" the surface, where "in the vicinity of" is e.g. from 5 cm to 20 cm from the surface; this is to be regarded as a proximity field.
- May discern between "in the vicinity of" and "at a distance from" the surface, where "at a distance from" is e.g. from 0.5 m to 2 m from the surface; this is to be regarded as a remote field.

The invention operates with a number of control commands that are executed in the apparatus, control commands related to the detected user-supplied commands. Examples of function are, but not limited to:
- A user approaches the front of the apparatus, and at a distance of about one meter the apparatus is activated to a predefined condition, e.g. by showing a given image on the display screen of the apparatus.
- The user approaches the proximity field area, and the image adapts itself to a given smaller size.
- The user acts with movements, e.g. with a hand, which are detected at the right side of the apparatus, entailing that the content shown on the display is rolled/scrolled to the right.
- The user acts with movements, e.g. with a hand, which are detected at the left side of the apparatus, entailing that the content shown on the display is rolled/scrolled to the left.
- The user acts with movements, e.g. with a hand, which are detected simultaneously at the right side as well as at the left side of the apparatus, entailing that the content shown on the display may be a selected object shown on the display.
- The user acts with movements, e.g. with a hand, against or away from the centre of the apparatus screen, entailing that the content shown on the display is enlarged/reduced (zoom in/out).
- The user has access to selection of functions by a direct physical activation of the dedicated areas on the surface and/or at the edge of the surface of the apparatus.

### List of Figures

Figure 1 shows the position of the detection means in an apparatus.
Figures 2-4 show the orientation of electric fields on and around an apparatus.
Figures 5-6 show block diagrams of the electronics in the detection means.

### Desscription Of The Invention

The invention discloses a solution optimised for receiving and processing issued commands from a user to an apparatus accurately and by simple means, where the commands may be issued by direct touch on the apparatus, issued in a proximity field around the apparatus and/or issued in a remote field around the apparatus. The invention combines detection via infrared signal technology and capacitive touch technology in a total solution.

There is provided a method for detecting user-supplied control commands, where the method is detecting and determining whether commands are issued remotely from the apparatus and/or issued in one or more individual electric fields in the proximity of the apparatus and/or whether the command is issued as a physical touch on the apparatus on one or more touch-sensitive fields, and where the method is characterised by
- one or more analog signal means, e.g. IR signal emitters and IR signal receivers; as alternative to IR, RF emitters and receivers may be applied;
- two or more electric fields produced by capacitive means;
- two or more of the capacitive means positioned in the same x,y plane, each disposed along a line and mutually in parallel along the x-axis or along the y-axis;
- at least one of the capacitive means situated along a line in a plane which is different from, but parallel with the x,y plane indicated above;
- one or more of the capacitive means being divided into two or more segments which are individually receptive to active input signals.

The conducting strips or the areas forming part of the capacitive sensor may be implemented on printed circuit boards in the apparatus, and/or they may be an integrated part of a touch sensitive screen.

The greatest precision is achieved by determining commands that are issued in a proximity field and a remote field, respectively, in front of the apparatus, in that an IR emitter and receiver means detect user-supplied control commands issued in a remote field at a distance from the apparatus when this is greater than the defined proximity field distance. As alternative to infrared technology (IR), ultrasound (RF) may be used.

The received commands issued by the user are processed by a control system, e.g. a microprocessor, in the apparatus, which transforms the commands to predefined apparatus functions. Any function which is relevant in a specific apparatus may be regulated and controlled by the control system interpreting the command and activating the function in accordance to it.

The commands issued by the user include both direct activation on the apparatus and object movements where the user moves, where part of the user moves, where the user moves an object, and the like. It will be understood that such an object may comprise any suitable physical token which can be detected by the system so that the user can input commands to the system, e.g. a remote control, a transmitter device, a object having reflective properties particular to the detection methods of the system, etc. It will be understood that in systems having advanced object recognition detection, the object may comprise any physical object recognisable by the system, e.g. a stylus, an imitation wand, etc.

Examples of user commands are, but not limited to:
- it is detected that an object approaches or an object is moving away from one or more proximity fields, and a related action is generated;
- it is detected that an object is moved in a proximity field, and a related action is generated;
- it is detected that an object approaches or an object is moving away from one or more remote fields, and a related action is generated;
- it is detected that an object is moved in a remote field, and a related action is generated;
- it is detected that an object touches a touch-sensitive field, and a related action is generated.

The invention finds wide application in apparatuses where efficient and price-attractive systems are required. Typical applications are for operation of multimedia apparatuses, AV systems, media players, TV apparatuses, PCs and domestic appliances such as ovens, washing machines, dishwashers and refrigerators.

### Comments to the Figures

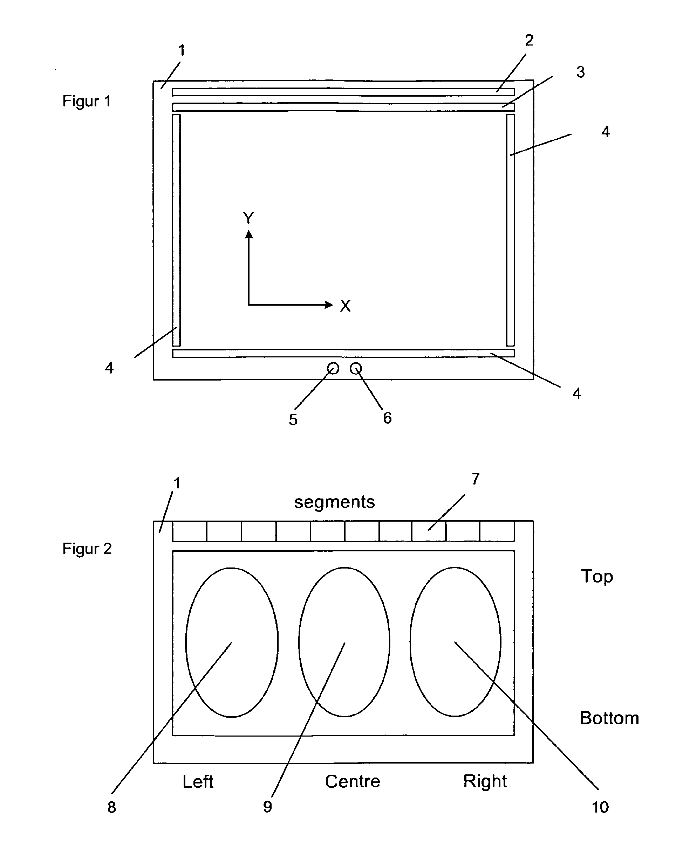

Figure 1 shows an apparatus 1 equipped with means for generating electric signals and fields used for detecting control commands issued by a user. The means are a combination of an IR signal generator 5 and an IR detector 6 and electric fields generated via capacitively controlled signal generators.

The IR system is used for detecting the presence of an object and/or movement in a remote field. There is used a known technique based on a signal carrier wave of 125 kHz in order to differentiate from IR remote control systems which are typically based on a signal carrier wave of 455 kHz. An optical lens ensures that the IR signal is emitted in a narrow field, e.g. 4 to 5 degrees.

If RF is used as alternative to the IR system, this is based on standard technology with a carrier wave > 40 kHz.

The "capacitive touch system" is based on conducting areas or conducting strips being applied to the printed circuit board (PCB) which is hidden behind the front plate of the apparatus, which may be display screen, a frame around the screen or a plate of glass, plastic or similar; the conducting strips can be made of copper, carbon or other conducting paste material which is applied or vaporised on the PCB. Depending on the functional demands to a given apparatus, two or more conducting areas or strips are applied.

In an implementation of the invention, a conducting strip 2 is provided at the back of the apparatus 1 along the edge of the top of the apparatus. It is divided into a number of segments 7, each representing a touch sensitive area. The system may detect that the user touches the front on the top of the apparatus as well as the edge on top of the apparatus.

Since the segmented detector 2 is implemented at the back side of the apparatus, it is not located in the same plane as the upper detector 3 which is implemented on the front side.

In an implementation of the invention, conducting strips 3,4 are provided along all edges on the apparatus 1. By using four conducting areas, two or more electric proximity fields may be discerned; the field intensity detected by each of the four sensors determines the position of an object, this e.g. being a user's hand or a finger.

A differential measurement is performed, and a simple calculation decides if an object is located in the left (L) proximate field R) or in the right (R) proximate field L) or at the centre (L=R). Correspondingly, a differential measurement may be performed, and a simple calculation decides if an object is located in the upper (T) proximate field (T>B) or in the lower (B) proximate field T) or at the centre (B=T).

Figure 2 shows an apparatus 1 having a touch field 7 divided into ten fields, e.g. corresponding to ten functions which may be activated by the user by his/her touch of respective fields.

In an implementation of the invention, three proximate field zones 8, 9, 10 are used, corresponding to discerning whether the object, e.g. the user's finger/hand, is moved in the left area (Left), in the right area (Right) or about the centre of the apparatus (Centre) when detecting issued user commands in the proximate field.

Similarly, it may be detected how the user's gesticulation in the proximity field can be related to command related functions, like "up" (Top) or "down" (Bottom) positions.

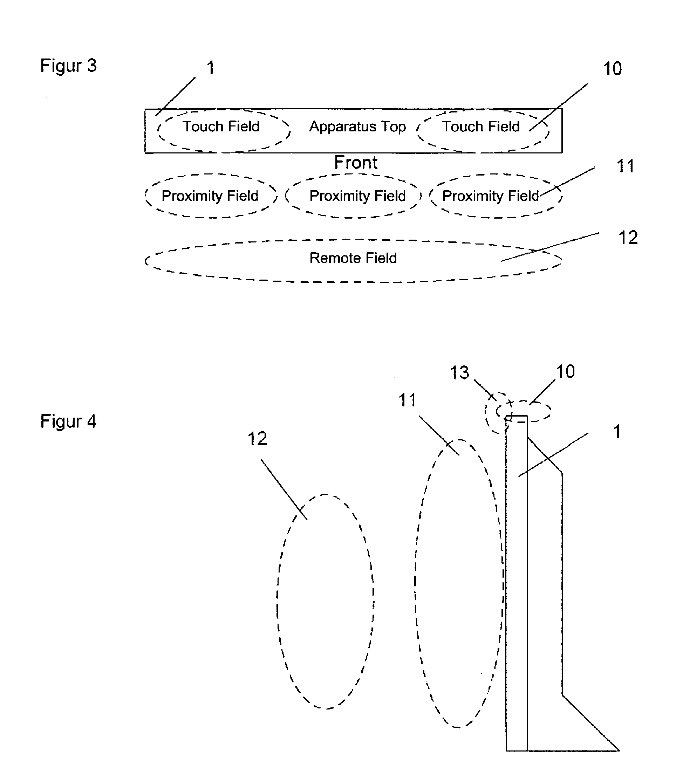

Figure 3 shows an apparatus 1 as seen from above.
- Touch fields 10 are active at the edge on the front side of the apparatus, e.g. the edge of the front glass of an LCD screen.
- Proximity fields 11 are active in front of the apparatus front side.
- Remote field 12 is active in front of the apparatus front side.

Figure 4 shows an apparatus 1 as seen from the side:
- Touch fields 10 are active at the edge on the front side of the apparatus, e.g. the edge of the front glass of an LCD screen. The upper front 13 on the front side of the apparatus will also constitute active touch fields.
- Proximity fields 11 are active in front of the apparatus front side.
- Remote field 12 is active in front of the apparatus front side.

It will be understood that other configurations and arrangements of said remote and proximity fields may be provided for, e.g. a different geometrical arrangement of said proximity fields, more than one remote field, etc.

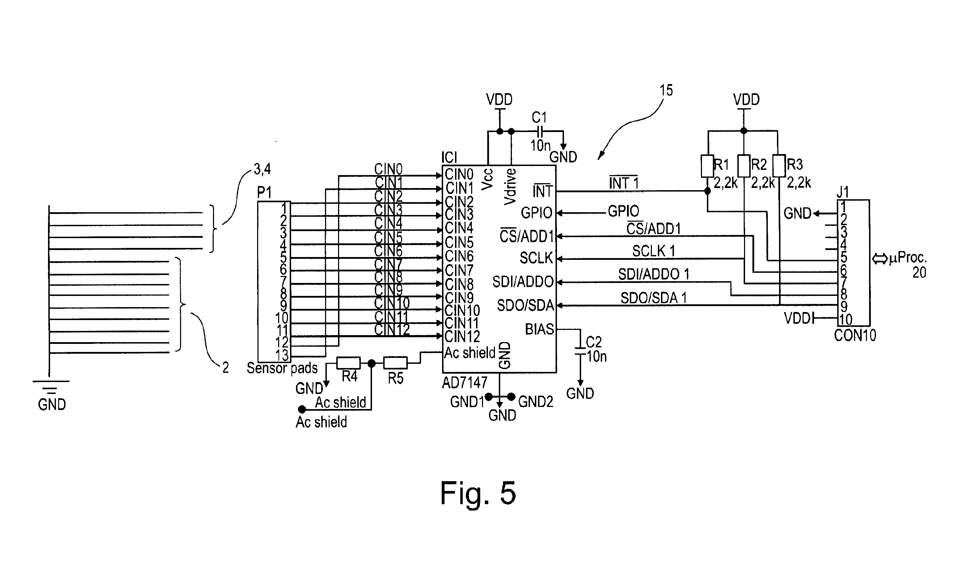

Figure 5 shows a preferred implementation of the detection system called "capacitive touch system". The detection system is connected to the system controller 20.

Four sensors 3, 4 in the shape of conducting strips are connected to the oscillator chip 15 of the standard system. The segmented sensor 2 is implemented with nine individual conducting areas that each are connected with the oscillator chip 15 of the standard system. This chip also detects capacity changes when the sensors 3, 4 are influenced by the user's finger/hand.

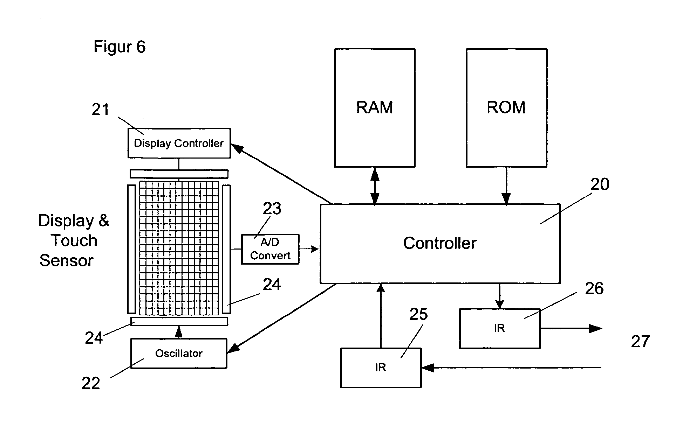

Figure 6 shows a preferred implementation of the control means of the detection system. A controller 20, e.g. a microprocessor, signal processor or similar with associated memory means, e.g. RAM and ROM, controls the IR system and the touch system.

IR signals are generated from controller 20 and modulated by a carrier wave 26. An object which is situated in the remote field will reflect the IR signal; the reflected signal is detected, carrier wave is filtered off 25, and the signal is interpreted by controller 20. As an alternative to IR, RF signals may be used.

Capacitive means 22 generate electric fields as part of the detection system in which conducting strips 24, 4 form part which, when an object approaches, influence the intensity of the electric fields. The field intensity and changes in the latter received via input means are detected by an A/D converter 23 and by controller 20 which interprets and transforms to relevant apparatus functions.

In an implementation of which screen means, e.g. an LCD screen, a plasma screen, LED, OLED or e-Ink, form a part, dedicated standard means 21 are used for controlling and updating the screen.

Preferably, the input device is a substantially planar body or panel which substantially stands proud of the associated device. This means that the panel is presented to the user, and the surfaces of the edge of the panel can be utilised by the user to input commands. In the case of a glass or plastic panel, it is preferable that such a panel is provided without a frame, so that the edge surfaces of the panel are exposed for the user inputs. The use of a display panel without a frame or bezel may also increase the aesthetic qualities of the device.

The invention is not limited to the embodiments described herein, and may be modified or adapted without departing from the scope of the present invention.

## Claims

1. A method for detecting user-supplied input control commands for an apparatus, wherein the apparatus comprises an input device having a primary display face provided in an x,y plane, at least one analog signal emitter, at least one analog signal receiver, and a plurality of capacitive means operable to generate a plurality of electric fields, wherein at least two of said capacitive means are positioned on the x,y plane of said primary display face, and wherein at least one of said capacitive means is provided adjacent said primary display face on a plane orthogonal to the x,y plane of said primary display face, wherein the method comprises the steps of:
detecting a user input command in the form of a touch command or a non-touch command;
in the case of a touch command, determining whether said touch command comprises a physical touch on said x,y plane of said primary display face or a physical touch on said plane orthogonal to said x,y, plane of said primary display face;
in the case of a non-touch command, determining whether said non-touch command is issued remotely from said apparatus or issued in one or more individual electric fields provided in the proximity of the apparatus; and
generating a control command based on the user input command detected.

2. The method of claim 1, wherein at least one of said capacitive means is provided lying along a line in a plane which is different from, but parallel to the x,y plane of said primary display face, and wherein the method comprises the step of determining whether said touch command comprises a physical touch on said plane parallel to the x,y plane of said primary display face.

3. A method according to claim 1 or claim 2, wherein one or more of the capacitive means are divided into two or more segments which are individually receptive to user input commands, and wherein the method comprises the step of determining at which segment said user input command is detected.

4. A method according to any preceding claim, wherein said input device comprises a substantially planar body standing proud of said apparatus, wherein said primary display face is provided on a major surface of said substantially planar body, and wherein at least one of said capacitive means is provided at a minor edge surface of said substantially planar body, and wherein the method comprises the step of determining whether said touch command comprises a physical touch on said primary display face or a physical touch on said minor edge surface.

5. A method according to any preceding claim, wherein one or more of the capacitive means are integrated in a touch-sensitive screen.

6. A method according to any preceding claim, wherein said at least one analog signal emitter and said at least one analog signal receiver are operable to detect user-supplied control commands issued in a remote field at a distance from the apparatus which is greater than a defined proximity field distance.

7. A method according to claim 6, wherein said at least one analog signal emitter and said at least one analog signal receiver are selected from one or more of the following:
an infra-red (IR) device, a radio frequency (RF) device, an ultrasound RF device.

8. A method according to any preceding claim, wherein at least one of said capacitive means is operable to generate electrical fields in the form of at least one proximity field located adjacent and substantially in front of said primary display face, wherein the method comprises the step of detecting that an object is moved into said at least one proximity field, moved out of said at least one proximity field or moved within said at least one proximity field, and wherein said step of generating a control command is based in part on said detection.

9. A method according to any preceding claim, wherein at least one of said capacitive means is operable to generate electrical fields in the form of at least one remote field located distant from and substantially in front of said primary display face, wherein the method comprises the step of detecting that an object is moved into said at least one proximity field, moved out of said at least one proximity field or moved within said at least one remote field, and wherein said step of generating a control command is based in part on said detection.

10. A method according to any preceding claim, wherein it is detected that an object touches a touch-sensitive field, and a related action is generated.

11. A touch-based input apparatus comprising:
a primary display face provided in an x,y plane;
at least one analog signal emitter;
at least one analog signal receiver;
a plurality of capacitive means operable to generate a plurality of electric fields; and
a control unit, wherein at least two of said capacitive means are positioned on the x,y plane of said primary display face, wherein at least one of said capacitive means is provided adjacent said primary display face on a plane orthogonal to the x,y plane of said primary display face, and wherein said control unit is operable to detect a user command in the form of a touch command or a non-touch command and to generate a control command based on the user command detected.

12. The input apparatus of claim 11, wherein said control unit is operable to:
detect a user command in the form of a touch command or a non-touch command;
determine whether said touch command comprises a physical touch on said x,y plane of said primary display face or a physical touch on said plane orthogonal to said x,y, plane of said primary display face; and
determine whether said non-touch command is issued remotely from said apparatus or issued in one or more individual electric fields provided in the proximity of the apparatus, and wherein said control unit is further operable to generate a control command based on the type of user command detected.

13. The input apparatus of claim 11 or claim 12, wherein at least one of said capacitive means is provided lying along a line in a plane which is different from, but parallel to the x,y plane of said primary display face, and wherein said control unit is further operable to determine whether said touch command comprises a physical touch on said plane parallel to the x,y plane of said primary display face.

14. The input apparatus of any one of claims claim 11-13, wherein one or more of said capacitive means are divided into a plurality of segments individually receptive to user input commands, and wherein the said control unit is operable to determine at which segment said user input command is detected.

15. The input apparatus of any one of claims claim 11-14, wherein the apparatus comprises an input device having a primary display face, said input device comprising a substantially planar body standing proud of said apparatus, wherein said primary display face is provided on a major surface of said substantially planar body, and wherein at least one of said capacitive means is provided at a minor edge surface of said substantially planar body, and wherein the method comprises the step of determining whether said touch command comprises a physical touch on said primary display face or a physical touch on said minor edge surface.
